# EUROPÄISCHE PATENTSCHRIFT

(11) **EP 2 071 732 B1**
(45) Veröffentlichungstag und Bekanntmachung des Hinweises auf die Patenterteilung: **09.11.2011**
(21) Anmeldenummer: 08105413.2
(22) Anmeldetag: 23.09.2008
(51) Int. Cl.: H04B 1/38

(54) **Schaltungsanordnung und Verfahren zur Übertragung von frequenzmodulierten Audio-Signalen an einen UKW-Empfänger mit Radio Data System (RDS)**
Control assembly and method for transferring frequency modulated audio signals to a VHF receiver with Radio Data System (RDS)
Dispositif de commutation et procédé de transmission de signaux audio à fréquence modulée sur un récepteur FM avec Radio Data System (RDS)

(30) Priorität: 08.11.2007 DE 102007053306
(43) Veröffentlichungstag der Anmeldung: 17.06.2009
(73) Patentinhaber: Robert Bosch GmbH, 70442 Stuttgart (DE)
(72) Erfinder: Huebner, Michael, 30827 Garbsen (DE)

(56) Entgegenhaltungen:
- EP-A- 1 868 296
- US-A1- 2003 036 357

## Beschreibung

Die Erfindung betrifft eine Schaltungsanordnung und ein Verfahren zur Übertragung von frequenzmodulierten Audio-Signalen an einen UKW-Empfänger. Eine derartige Übertragung ist beispielsweise zur Anbindung von Audio-Komponenten an ein RDS-Radio (radio data system), insbesondere für Anwendungen im Kraftfahrzeugbereich, geeignet.

### Stand der Technik

Drahtlose Verbindungen zwischen Komponenten elektronischer Systeme kommen verstärkt zur Erhöhung der Flexibilität zum Einsatz und reduzieren den Verkabelungsaufwand, insbesondere im Fall häufiger Um- oder Nachkonfigurationen. Zur Realisierung der drahtlosen Verbindungen sind in vielen Fällen zumindest zeitweise Funkübertragungsstrecken zwischen den einzelnen Komponenten zu aktivieren, um die erforderlichen Signale und/oder Informationen übertragen zu können. Dies erfolgt in sehr unterschiedlichen Frequenzbereichen, wobei generell möglichst niedrige Sendeleistungen angestrebt werden. Besonders attraktiv zum Aufbau der Funkübertragungsstrecken sind Frequenzbereiche, die eine Nutzung herkömmlicher und daher weit verbreiteter und kostengünstiger Empfängerschaltungen, beispielsweise in UKW-Empfängern, erlauben.

Der Umgang mit kleinen Sendeleistungen beim Aufbau drahtloser Übertragungsstrecken ist mit technischen Besonderheiten verbunden, die neben der entsprechend geringen Reichweite vor allem mögliche Beeinträchtigungen durch Störsignale und Empfangsstörungen auf verwendeten bzw. dicht benachbarten Frequenzen betreffen. Die angesprochenen Probleme bestehen insbesondere auf Frequenzen im herkömmlichen UKW-Bereich (87,5 MHz bis 108,0 MHz). Eine Besonderheit dieses Frequenzbereiches besteht darin, dass er von zahlreichen permanent sendenden leistungsstarken UKW-Sendern zur Rundfunkübertragung genutzt wird. Deren Sendebereiche überlappen sich vielfach. Außerdem ist die in diesem Frequenzbereich für private Anwendungen freigegebene Maximalleistung außerordentlich gering (50 nW). Dadurch ergibt sich eine geringe Reichweite privater Anwendungen, die nur wenige Meter beträgt. Das erfordert eine besonders sorgfältige Trennung zwischen Stör- und Nutzsignalen.

Es ist bekannt, störende Einflüsse auf Übertragungsstrecken im UKW-Bereich dadurch zu reduzieren, dass zunächst geprüft wird, auf welchen Kanälen ein gegebenenfalls störendes Signal gesendet wird bzw. empfangbar ist und anschließend eine Übertragungsfrequenz festgelegt wird, die sich innerhalb des zur Verfügung stehenden Frequenzbandes möglichst deutlich von der Frequenz identifizierter belegter Kanäle unterscheidet. Aus EP-A-1 868 296 und US-A-2003/036357 ist beispielsweise bekannt, das Rundfunkband nach freien Frequenzen zu durchsuchen, wobei als Kriterium die Empfangsfeldstärke auf einer betrachteten Frequenz herangezogen wird, und sodann eine oder mehrere freie Frequenzen zum Senden von Signalen angeschlossener Quellen zu verwenden. Es ist daraus ferner bekannt, RDS-Signale mit einer Frequenzliste der als frei erkannten Frequenzen zu erstellen.

Es ist des Weiteren bekannt, das Übersprechen zwischen benachbarten bzw. verwendeten Kanälen direkt zu ermitteln und eine entsprechende Kanalwahl zu treffen, um so das messbare Übersprechen zwischen einzelnen Übertragungskanälen gering zu halten. Sender und Empfänger der Übertragungsstrecke werden dabei teilweise automatisch auf eine entsprechend ausgewählte Frequenz abgestimmt (US20060009245A1). Ein Nachteil derartiger Systeme besteht darin, dass die an der Übertragung beteiligten Komponenten zur Realisierung einer derartigen Frequenzabstimmung über einen separaten Kanal miteinander kommunizieren müssen, was den Aufwand derartiger Systeme relativ hoch hält.

Dieser Nachteil kann teilweise dadurch vermieden werden, dass für eine optimale Übertragung zwischen einzelnen Systemkomponenten geeignete Frequenzen ermittelt werden, die über ein entsprechendes Display angezeigt und anschließend manuell an einzelnen Komponenten eingestellt werden können (US20030236075A1). Diese Vorgehensweise wird jedoch nicht mit derzeit bestehenden Komfortvorstellungen konform gehen und ist insbesondere für Audiosysteme im Kraftfahrzeugbereich aufgrund des hohen Bedienaufwandes und der Häufigkeit von Änderungen der Empfangssituation auch aus Sicherheitsgründen nicht empfehlenswert.

### Offenbarung der Erfindung

Die Erfindung besteht in einer Schaltungsanordnung zur Übertragung von frequenzmodulierten Audio-Signalen an einen UKW-Empfänger, umfassend mindestens einen FM-Modulator, eine Sendeantenne, eine Empfangsantenne, einen FM-Tuner, eine Signalbewertungseinheit, eine Steuereinheit und einen RDS-Generator, wobei die Empfangsantenne, der FM-Tuner und die Signalbewertungseinheit so miteinander verbunden sind, dass ein von der Sendeantenne ausgestrahltes frequenzmoduliertes Audio-Signal empfangen, demoduliert und qualitativ bewertet werden kann, die Steuereinheit über Mittel verfügt, um in Abhängigkeit von der qualitativen Bewertung des empfangenen Signals eine Trägerfrequenz am FM-Modulator einzustellen, und der RDS-Generator über Mittel zur Erzeugung eines RDS-Signals verfügt, welches zumindest eine PID (program ID) und eine Liste von Trägerfrequenzen enthält, bei deren Verwendung während der qualitativen Bewertung das bewertete Signal zumindest ein Mindestkriterium erfüllt hat. Diese Schaltungsanordnung ermöglicht ein Verfahren zur Übertragung von frequenzmodulierten Audio-Signalen an einen UKW-Empfänger, das eine automatische Frequenzeinstellung einer zur Übertragung von FM-modulierten Audio-Signalen geeigneten Frequenz umfasst, wobei die Eignung mehrerer Frequenzen für die Übertragung von FM-modulierten Audio-Signalen geprüft wird, indem nacheinander ein FM-moduliertes Audiosignal auf den zu prüfenden Frequenzen gesendet und empfangen wird, wobei eine Analyse des empfangenen Audiosignals vorgenommen und daraus ein Kriterium der Eignung der jeweiligen Frequenz für die Übertragung von FM-modulierten Audio-Signalen abgeleitet und geeignete Frequenzen in einer Liste mit Alternativfrequenzen abgespeichert werden, die als Bestandteil des RDS-Signals ausgesendet wird.

Das Kriterium, welches eine Aussage über die Eignung der jeweiligen Frequenz für die Übertragung von FM-modulierten Audio-Signalen in einer bestimmten Umgebungssituation liefert, kann beispielsweise durch unterschiedliche Vergleichsoperationen gewonnen werden, in denen das empfangene demodulierte Signal mit dem Audio-Signal verglichen wird, welches dem FM-Modulator zugeleitet wurde.

### Kurze Beschreibung der Zeichnungen

An einem Ausführungsbeispiel wird die Erfindung näher erläutert. Es zeigen:
- Fig. 1: ein Prinzipschaltbild einer herkömmlichen Schaltung einer drahtlosen Übertragungsstrecke mit einem FM-Modulator und einem UKW-Empfänger;
- Fig. 2: ein Prinzipschaltbild einer erfindungsgemäßen Schaltungsanordnung;
- Fig. 3: einen Programmablaufplan eines Verfahrens zur erfindungsgemäßen Übertragung von frequenzmodulierten Audio-Signalen an einen UKW-Empfänger; und
- Fig. 4: ein Prinzipschaltbild einer weiteren verbesserten Ausführung einer erfindungsgemäßen Schaltungsanordnung.

### Ausführungsformen der Erfindung

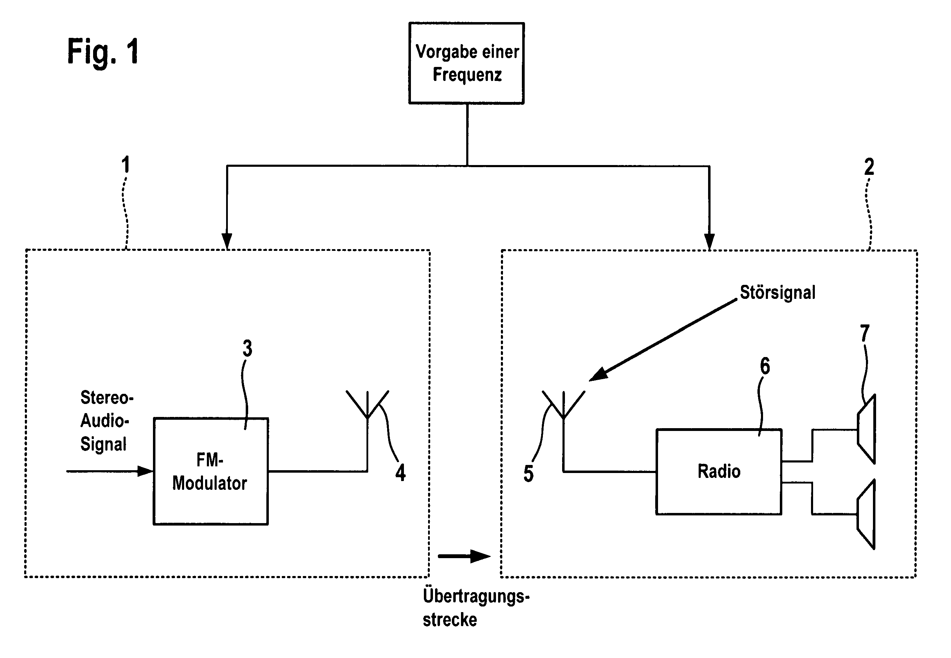

Fig. 1 zeigt ein Prinzipschaltbild einer herkömmlichen Schaltung einer drahtlosen Übertragungsstrecke mit einem FM-Modulator und einem UKW-Empfänger, wie sie zur Anbindung von Audio-Komponenten eingesetzt werden kann. Das Ausgangssignal einer Audio-Komponente 1, also ein Stereo-Audio-Signal, wie es beispielsweise von einem CD-Player oder mp3-Player erzeugt wird, soll einer empfangenden Komponente 2, beispielsweise einem Autoradio, zugeleitet werden. Es bildet dazu das Eingangssignal eines FM-Modulators 3, der dieses Audio-Signal auf eine Trägerfrequenz aufmoduliert und in dieser Form an eine Sendeantenne 4 weiterleitet. Das von der mit dem FM-Modulator 3 verbundenen Sendeantenne 4 abgestrahlte Signal kann von einer Empfangsantenne 5, die mit einem UKW-Empfänger 6 verbunden ist, empfangen, entsprechend demoduliert und weiterverarbeitet und verstärkt an die Ausgabeeinheit 7 mit einem entsprechenden Satz Lautsprechern weitergeleitet werden, wenn sich die Empfangsantenne 5 in der Reichweite der Sendeantenne 4 befindet und eine Frequenz verwendet wird, auf der das Nutzsignal in ausreichender Qualität von Störsignalen separiert werden kann.

Die Frequenzeinstellung, also die Auswahl der Trägerfrequenz, auf welche das Audio-Signal durch den FM-Modulator 3 moduliert wird, und die Abstimmung des im UKW-Empfänger 6 enthaltenen Tuners auf die gleiche Frequenz erfolgt durch die Vorgabe einer Frequenz sowohl an der anzubindenden Audio-Komponente 1 als auch an der empfangenden Komponente 2, um die Übertragungsstecke zu realisieren. Diese Vorgabe einer Frequenz kann manuell oder teilweise automatisiert erfolgen, muss jedoch bei jedem erforderlich werdenden Frequenzwechsel an beiden Komponenten 1, 2 aufeinander abgestimmt erfolgen, um ein Abbrechen der Übertragungsstrecke zu verhindern.

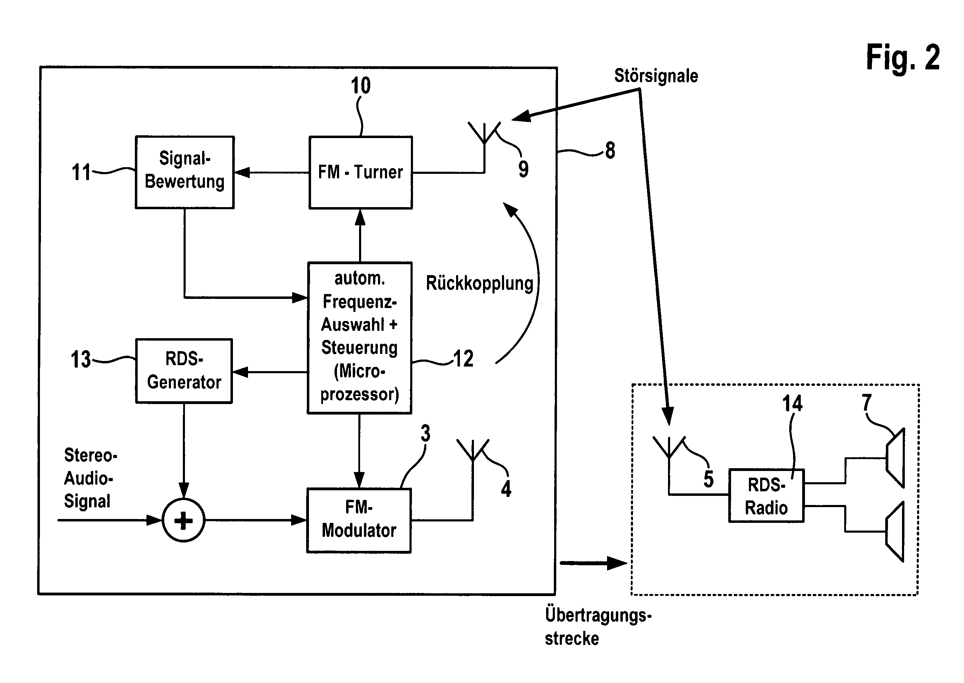

Fig. 2 zeigt ein Prinzipschaltbild einer erfindungsgemäßen Schaltungsanordnung 8 mit einem FM-Modulator 3 zur Anbindung von Audio-Komponenten. Die dargestellte Schaltungsanordnung kann fest mit einer Audio-Komponente verbunden sein. Das Stereo-Audio-Signal der anzukoppelnden Audiokomponente dient auch in diesem Fall als Eingangssignal des FM-Modulators 3 und wird entsprechend moduliert an eine Sendeantenne 4 weitergeleitet und versendet. Die erfindungsgemäße Schaltungsanordnung 8 verfügt des Weiteren über eine eigene Empfangsantenne 9, die das von der Sendeantenne 4 ausgesendete Signal empfängt und auf diese Weise eine Analyse des in der Nähe der Sendeantenne 4 des FM-Modulators 3 empfangbaren Signals ermöglicht. Zu diesem Zweck wird das von der Empfangsantenne 9 empfangene Signal einem FM-Tuner 10 zugeführt, der dieses Signal in herkömmlicher Weise demoduliert und sein Ausgangssignal an eine Signalbewertungseinheit 11 weiterleitet, in welcher eine Bewertung des Ausgangssignals des FM-Tuners 10 vorgenommen wird, die ein Urteil darüber erlaubt, ob das empfangene Signal eine sichere und qualitativ hochwertige Audio-Übertragung zwischen der anzubindenden Audio-Komponente und einer empfangenden Komponente erwarten lässt. Das Ergebnis dieser Signalbewertung wird einer Steuereinheit 12 zugeführt, die über einen Mikroprozessor verfügt und in Abhängigkeit von der Signalbewertung eine Beibehaltung oder Änderung der Trägerfrequenz, die von dem FM-Modulator 3 verwendet werden soll, veranlassen kann. Die Steuereinheit 12 dient gleichzeitig der Abstimmung des FM-Tuners 10 auf die Trägerfrequenz des FM-Modulators 3. Die Steuereinheit 12 ist gleichzeitig mit einem RDS-Generator 13 verbunden, der im Ergebnis der Signalbewertung ein RDS-Signal generiert, welches ebenfalls dem FM-Modulator 3 zur Modulation und Versendung zugeführt wird und eine Information über zumindest einmal als geeignet bewertete Trägerfrequenzen enthält.

Die Steuereinheit 12 wird vorteilhafterweise so eingesetzt, dass vorzugsweise in kurzen Zyklen ein Satz von möglichen einstellbaren Trägerfrequenzen, im Extremfall alle Frequenzen des FM-Bandes (87,5 MHz bis 108,0 MHz), bewertet werden, wodurch die am besten geeigneten Frequenzen für den Aufbau und die Aufrechterhaltung der gewünschten FM-Übertragungsstrecke ermittelt und in das regelmäßig aktualisierte RDS-Signal eingepflegt werden können. Das RDS-Signal enthält danach eine sogenannte AF-Liste, in der mögliche Alternativfrequenzen zur momentan eingestellten Trägerfrequenz aufgelistet sind, die in einer bestimmten Umgebungssituation zur Verfügung stehen, und gute Übertragungseigenschaften erwarten lassen. Gleichzeitig kann die Eignung der für die eigentliche Übertragungsstrecke verwendeten Frequenz regelmäßig einer aktuellen Bewertung unterzogen werden, um gegebenenfalls auf veränderte Umgebungsbedingungen mit einem Frequenzwechsel reagieren zu können. Beispielsweise kann so eine automatische Frequenzeinstellung des FM-Modulators 3 auf die zur Übertragung von FM-modulierten Audio-Signalen jeweils am besten geeignete Frequenz erfolgen. Durch die schaltungsinterne Rückkopplung des gesendeten Signals, wird eine weitgehende Bewertung der einzelnen Frequenzen bezüglich ihrer momentanen Eignung für die Übertragung von FM-modulierten Audio-Signalen möglich, ohne dass die Übertragungsstrecke zur Übertragung des Nutzsignals bestehen muss. Zwar erfolgt eine laufende Bewertung der aktuellen Empfangsverhältnisse am Ort bzw. in der Nähe des FM-Modulators 3 und nicht durch die Empfangsantenne 5 des UKW-Empfängers. Durch die geringe Reichweite und den damit verbundenen geringen Abstand zwischen der erfindungsgemäßen Schaltungsanordnung 8 und dem verwendeten UKW-Empfänger werden sich jedoch die Empfangsverhältnisse an beiden Empfangsantennen stark ähneln, was die erfindungsgemäße schaltungsinterne Signalbewertung in den meisten Fällen rechtfertigt.

Vorteilhafterweise verwendet der RDS-Generator 13 zur Erzeugung des RDS-Signals eine von der Steuereinheit 12 bereitgestellte AF-Liste und eine fest eingestellte PID (Programm-ID), eine Kennung, die eine Identifizierung der Schaltungsanordnung und eine RDS-konforme Frequenzverfolgung durch RDSkompatible Empfänger erleichtert. Derartige Empfänger testen in der Regel alle Alternativ-Frequenzen einer AF-Liste und überprüfen PID und Signalqualität.

Die erfindungsgemäße Schaltungsanordnung 8 bildet einen FM-Modulator, der über die Fähigkeit einer adaptiven Frequenzumschaltung verfügt, wobei ein auszusendendes frequenzmoduliertes Nutzsignal RDS-konform aufbereitet wird. Er ändert selbständig die Träger- bzw. Sendefrequenz, wenn es erforderlich wird, sich ändernden Umweltbedingungen anzupassen, um eine Beeinträchtigung der Qualität übertragener Nutzsignale zu vermeiden. Wenn als empfangende Komponente ein RDS-Radio 14 verwendet wird, muss bei einer Umschaltung der Übertragungsfrequenz nicht direkt in die Abstimmung des empfangenden UKW-Empfängers eingegriffen werden. Dadurch wird der Aufbau einer gesonderten Übertragungsstrecke zur Steuerung der Frequenzabstimmung überflüssig, was einen wesentlichen Vorteil der Erfindung bildet. Ein RDS-Radio üblicher Funktionalität sucht gemäß der AF-Liste das zu empfangende Signal regelmäßig auf allen abgespeicherten Frequenzen und nimmt eine Wichtung und Auswahl der jeweils geeignetsten Frequenz vor. Das vom RDS-Generator 13 erzeugte RDS-Signal wird zusammen mit dem modulierten Audio-Signal über die Sendeantenne 4 des FM-Modulators 3 abgestrahlt und steht entsprechend zum Empfang durch den Receiver des RDS-Radios 14 zur Verfügung. Wenn die vorliegende erfindungsgemäße Schaltung nur auf einer Frequenz sendet, steht ein valides Nutz- und RDS-Signal auch nur auf einer Frequenz zu Verfügung. Nach einer primären Frequenzwahl am RDS-Radio 14, die mit der Einstellung eines üblichen Rundfunksenders vergleichbar ist, kann das RDS-Radio 14 durch Auswertung des RDS-Signals und gegebenenfalls der Kennung (PID) automatisch erfolgende Frequenzsprünge erkennen und die jeweils vom FM-Modulator 3 benutzte Frequenz schnell auffinden und seine Empfangsschaltung auf diese Frequenz abstimmen. Die erfindungsgemäß aufgebaute Übertragungsstrecke wird also mit Ausnahme kurzer technisch bedingter Pausen, die für diese Abstimmung erforderlich sind, automatisch aufrechterhalten, ohne dass bei einer Verschlechterung der Empfangsbedingungen eine nutzerbewirkte Frequenzkorrektur vorgenommen werden muss.

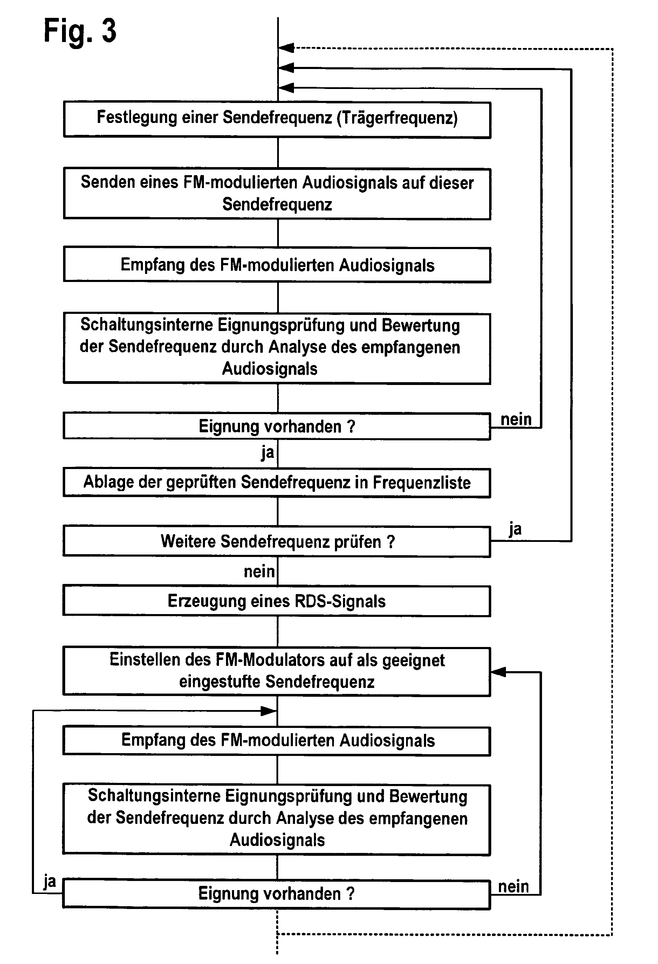

Fig. 3 zeigt einen Programmablaufplan eines Verfahrens zur erfindungsgemäßen Übertragung von frequenzmodulierten Audio-Signalen an einen UKW-Empfänger. Das erfindungsgemäße Verfahren umfasst zumindest die folgende Sequenz. Zunächst erfolgt die Festlegung einer Sendefrequenz im Sinne einer Trägerfrequenz eines im FM-Band liegenden Kanals. Auf diese Trägerfrequenz wird ein Audiosignal aufmoduliert und ausgesendet. Die erfindungsgemäße Schaltungsanordnung verfügt zugleich über eine Empfangseinheit, über welche, wie bereits ausgeführt, das ausgesendete FM-modulierte Audiosignal zeitgleich empfangen wird, wonach es nach einer entsprechenden Demodulation analysiert wird. Diese Analyse kann eine Bestimmung des Signalrauschabstandes umfassen oder andere Prüfmethoden benutzen, die Aussagen über die Qualität des an der Empfangseinheit anliegenden Audiosignals erlauben. Das Ergebnis der Analyse des empfangenen Audiosignals fließt in eine schaltungsinterne Eignungsprüfung und Bewertung der verwendeten Sende- bzw. Trägerfrequenz ein. Im Ergebnis dieser Eignungsprüfung wird die geprüfte Sendefrequenz als für die angestrebte Übertragung von Audiosignalen geeignet oder ungeeignet klassifiziert. Im Falle der Nichteignung wird die geprüfte Sendefrequenz verworfen und das Verfahren mit einer anderen Sendefrequenz wiederholt. Im Falle der Eignung der geprüften Sendefrequenz wird diese Frequenz in einer Frequenzliste hinterlegt und das Verfahren gegebenenfalls mit weiteren zu prüfenden potentiellen Sendefrequenzen wiederholt. Sind keine weiteren Sendefrequenzen für eine erfindungsgemäße Prüfung vorgesehen, so wird über den RDS-Generator ein RDS-Signal erzeugt, welches zumindest die Liste der als geeignet bewerteten bisher geprüften Sendefrequenzen in für ein RDS-Radio lesbarer Form enthält. Anschließend wird das zu sendende FM-modulierte Audiosignal in Verbindung mit dem erfindungsgemäß generierten RDS-Signal auf einer als geeignet eingestuften Sendefrequenz abgestrahlt. Diese verwendete Sendefrequenz kann permanent der schaltungsinternen erfindungsgemäßen Eignungsprüfung unterzogen werden, um bei Feststellung einer schwindenden Eignung automatisch zu einer anderen als geeignet bewerteten und hinterlegten Sendefrequenz zu wechseln. Durch eine zyklische Wiederholung des gesamten dargestellten Verfahrens kann dafür gesorgt werden, dass die in der Frequenzliste hinterlegten potentiellen bzw. alternativen Sendefrequenzen stets aktuell gehalten werden, was eine automatisierte Anpassung der jeweils verwendeten Sendefrequenz an sich ändernde, insbesondere die Empfangsqualität beeinflussende Umgebungsbedingungen erlaubt und die aktualisierte Bereitstellung einer Information über mögliche Alternativfrequenzen sichert.

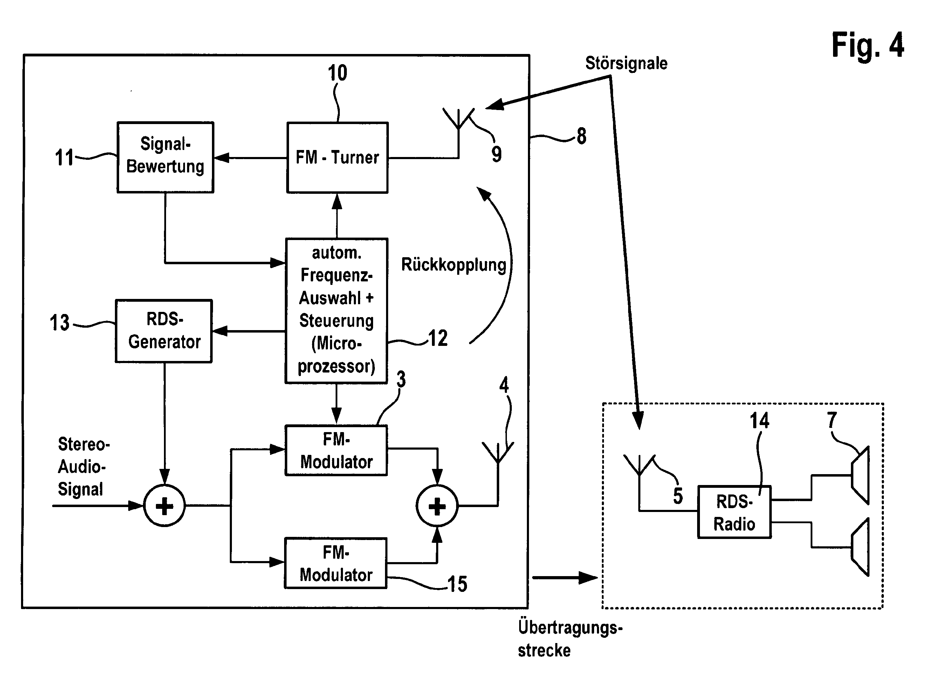

Fig. 4 zeigt ein Prinzipschaltbild einer weiteren verbesserten Ausführung einer erfindungsgemäßen Schaltungsanordnung. Um technisch bedingte Unterbrechungen der Übertragungungsstrecke, die während einer automatischen Frequenzabstimmung eines RDS-Radios 14 nach einem Wechsel der Trägerfrequenz des FM-Modulators 3 auftreten können, zu minimieren, verfügt die beispielhafte Schaltungsanordnung 8 zusätzlich zur Ausstattung gemäß Fig. 2 über einen zweiten FM-Modulator 15, der gleichzeitig mit dem ersten FM-Modulator 3 betrieben werden kann, wobei die Steuereinheit 12 über Mittel verfügt, um am zweiten FM-Modulator 15 eine von der Trägerfrequenz am ersten FM-Modulator 3 abweichende Trägerfrequenz einzustellen. Während der Übertragung der FM-modulierten Audiosignale wird das Nutzsignal auf zwei zur Übertragung von FM-modulierten Audio-Signalen geeigneten Frequenzen versendet, wobei in dem Fall, dass der Unterschied der Eignung zur Übertragung von FM-modulierten Audio-Signalen zwischen den beiden Frequenzen eine festgelegte Schwellgröße erreicht, die Frequenz mit der geringer bewerteten Eignung automatisch durch eine besser geeignete Frequenz ersetzt wird. Beispielsweise können die beiden FM-Modulatoren 3, 15 im Wechsel auf die jeweils beste Frequenz eingestellt werden. Wenn an einem der beiden FM-Modulatoren 3, 15 eine bestimmte Frequenz eingestellt ist, bleibt diese solange eingestellt, bis diese signifikant schlechter ist, als die am anderen FM-Modulator 15, 3 eingestellte Frequenz. Dadurch wird es sehr wahrscheinlich, dass das RDS-Radio 14 bereits vorher auf die Frequenz FM-Modulators 15, 3 gesprungen ist, der mit der besser geeigneten Frequenz betrieben wird. Der Wechsel der Trägerfrequenz des anderen FM-Modulators 3, 15 wird somit nicht wahrnehmbar.

## Patentansprüche

1. Schaltungsanordnung (8) zur Übertragung von frequenzmodulierten Audio-Signalen an einen UKW-Empfänger (6, 14), umfassend mindestens einen FM-Modulator (3), eine Sendeantenne (4), eine Empfangsantenne (9), einen FM-Tuner (10), eine Signalbewertungseinheit (11), eine Steuereinheit (12) und einen RDS-Generator (13), wobei die Empfangsantenne (9), der FM-Tuner (10) und die Signalbewertungseinheit (11) so miteinander verbunden sind, dass ein von der Sendeantenne (4) ausgestrahltes frequenzmoduliertes Audio-Signal empfangen, demoduliert und qualitativ bewertet wird, , die Steuereinheit (12) über Mittel verfügt, um in Abhängigkeit von der qualitativen Bewertung des empfangenen Signals eine Trägerfrequenz am FM-Modulator (3) einzustellen, und der RDS-Generator (13) über Mittel zur Erzeugung eines RDS-Signals verfügt, welches zumindest eine Liste von Trägerfrequenzen enthält, bei deren Verwendung während der qualitativen Bewertung das bewertete Signal zumindest ein Mindestkriterium erfüllt hat.

2. Schaltungsanordnung nach Anspruch 1, **dadurch gekennzeichnet, dass** ein zweiter FM-Modulator (15) umfasst ist, der gleichzeitig mit dem ersten FM-Modulator (3) betrieben werden kann, wobei die Steuereinheit (12) über Mittel verfügt, um am zweiten FM-Modulator (15) eine von der Trägerfrequenz am ersten FM-Modulator (3) abweichende Trägerfrequenz einzustellen.

3. Schaltungsanordnung nach Anspruch 1 oder 2, **dadurch gekennzeichnet, dass** die Schaltungsanordnung (8) fest mit einer Audiokomponente verbunden ist.

4. Schaltungsanordnung nach einem der Ansprüche 1 bis 3, **dadurch gekennzeichnet, dass** der RDS-Generator (13) über Mittel zur Erzeugung eines Kennsignals (PID) verfügt.

5. Verfahren zur Übertragung von frequenzmodulierten Audio-Signalen an einen UKW-Empfänger, das eine automatische Frequenzeinstellung einer zur Übertragung von FM-modulierten Audio-Signalen geeigneten Frequenz umfasst, wobei die Eignung mehrerer Frequenzen für die Übertragung von FM-modulierten Audio-Signalen geprüft wird, indem nacheinander ein FM-moduliertes Audiosignal auf den zu prüfenden Frequenzen gesendet und zeitgleich empfangen wird, wobei eine Analyse des empfangenen Audiosignals vorgenommen und daraus ein Kriterium der Eignung der jeweiligen Frequenz für die Übertragung von FM-modulierten Audio-Signalen abgeleitet und geeignete Frequenzen in einer Frequenzliste abgespeichert werden, die in Form eines RDS-Signals zur Verfügung gestellt wird.

6. Verfahren nach Anspruch 5, **dadurch gekennzeichnet, dass** die Prüfung der Eignung mindestens einer Frequenz für die Übertragung von FM-modulierten Audio-Signalen zyklisch wiederholt und die Frequenzliste aktualisiert wird.

7. Verfahren nach Anspruch 5 oder 6, **dadurch gekennzeichnet, dass** während der Übertragung der FM-modulierten Audiosignale eine automatische Frequenzeinstellung auf die zur Übertragung von FM-modulierten Audio-Signalen am besten geeignete Frequenz erfolgt.

8. Verfahren nach einem der Ansprüche 5 bis 7, **dadurch gekennzeichnet, dass** während der Übertragung der FM-modulierten Audiosignale das Nutzsignal auf zwei zur Übertragung von FM-modulierten Audio-Signalen geeigneten Frequenzen versendet wird, wobei in dem Fall, dass der Unterschied der Eignung zur Übertragung von FM-modulierten Audio-Signalen zwischen den beiden Frequenzen eine festgelegte Schwellgröße erreicht, die Frequenz mit der geringer bewerteten Eignung automatisch durch eine besser geeignete Frequenz ersetzt wird.

9. Verfahren nach einem der Ansprüche 5 bis 8, **dadurch gekennzeichnet, dass** alle potentiellen Sendefrequenzen innerhalb des benutzten Frequenzbandes auf ihre Eignung für die Übertragung von FM-modulierten Audio-Signalen geprüft werden.

10. Verfahren nach einem der Ansprüche 5 bis 9, **dadurch gekennzeichnet, dass** mit dem RDS-Signal eine Kennung (PID) versendet wird.

## Claims

1. Circuit arrangement (8) for transmitting frequency-modulated audio signals to a VHF receiver (6, 14), comprising at least one FM modulator (3), a transmission antenna (4), a reception antenna (9), an FM tuner (10), a signal assessment unit (11), a control unit (12) and an RDS generator (13), wherein the reception antenna (9), the FM tuner (10) and the signal assessment unit (11) are connected to one another such that a frequency-modulated audio signal emitted by the transmission antenna (4) is received, demodulated and qualitatively assessed, the control unit (12) has means for taking the qualitative assessment of the received signal as a basis for adjusting a carrier frequency on the FM modulator (3), and the RDS generator (13) has means for producing an RDS signal which contains at least one list of carrier frequencies, the use of which has involved the assessed signal satisfying at least one minimum criterion during the qualitative assessment.

2. Circuit arrangement according to Claim 1, **characterized in that** a second FM modulator (15) is included which can be operated at the same time as the first FM modulator (3), wherein the control unit (12) has means for adjusting a carrier frequency on the second FM modulator (15), which carrier frequency differs from the carrier frequency on the first FM modulator (3).

3. Circuit arrangement according to Claim 1 or 2, **characterized in that** the circuit arrangement (8) is permanently connected to an audio component.

4. Circuit arrangement according to one of Claims 1 to 3, **characterized in that** the RDS generator (13) has means for producing a characteristic signal (PID).

5. Method for transmitting frequency-modulated audio signals to a VHF receiver, which method comprises automatic frequency adjustment of a frequency which is suitable for transmitting FM-modulated audio signals, wherein the suitability of a plurality of frequencies for the transmission of FM-modulated audio signals is checked by successively sending and simultaneously receiving an FM-modulated audio signal on the frequencies that are to be checked, wherein the received audio signal is analysed and said analysis is used to derive a criterion for the suitability of the respective frequency for the transmission of FM-modulated audio signals, and suitable frequencies are stored in a frequency list which is made available in the form of an RDS signal.

6. Method according to Claim 5, **characterized in that** the check on the suitability of at least one frequency for the transmission of FM-modulated audio signals is repeated cyclically and the frequency list is updated.

7. Method according to Claim 5 or 6, **characterized in that** during the transmission of the FM-modulated audio signals there is automatic frequency adjustment to the frequency which is best suited to transmitting FM-modulated audio signals.

8. Method according to one of Claims 5 to 7, **characterized in that** during the transmission of the FM-modulated audio signals the useful signal is sent on two frequencies which are suitable for transmitting FM-modulated audio signals, wherein if the difference in the suitability for transmitting FM-modulated audio signals between the two frequencies reaches a stipulated threshold magnitude then the frequency having the suitability assessed as being lower is automatically replaced by a better suited frequency.

9. Method according to one of Claims 5 to 8, **characterized in that** all potential transmission frequencies within the frequency band used are checked for their suitability for the transmission of FM-modulated audio signals.

10. Method according to one of Claims 5 to 9, **characterized in that** the RDS signal is used to send an identifier (PID).

## Revendications

1. Arrangement de circuit (8) pour la transmission de signaux audio modulés en fréquence à un récepteur FM (6, 14), comprenant au moins un modulateur FM (3), une antenne d'émission (4), une antenne de réception (9), un tuner FM (10), une unité d'évaluation de signal (11), une unité de commande (12) et un générateur RDS (13), l'antenne de réception (9), le tuner FM (10) et l'unité d'évaluation de signal (11) étant reliés entre eux de telle sorte qu'un signal audio modulé en fréquence diffusé par l'antenne d'émission (4) est reçu, démodulé et soumis à une évaluation qualitative, l'unité de commande (12) disposant de moyens pour régler une fréquence porteuse sur le modulateur FM (3) en fonction de l'évaluation qualitative du signal reçu et le générateur RDS (13) disposant de moyens pour générer un signal RDS, lesquels contiennent au moins une liste de fréquences porteuses pour lesquelles, lorsqu'elles sont utilisées, le signal évalué doit remplir au moins un critère minimum pendant l'évaluation qualitative.

2. Arrangement de circuit selon la revendication 1, **caractérisé en ce qu'**il comprend un deuxième modulateur FM (15) qui peut être utilisé simultanément avec le premier modulateur FM (3), l'unité de commande (12) disposant de moyens pour régler sur le deuxième modulateur FM (15) une fréquence porteuse différente de la fréquence porteuse du premier modulateur FM (3).

3. Arrangement de circuit selon la revendication 1 ou 2, **caractérisé en ce que** l'arrangement de circuit (8) est relié à demeure avec un composant audio.

4. Arrangement de circuit selon l'une des revendications 1 à 3, **caractérisé en ce que** le générateur RDS (13) dispose de moyens pour générer un signal d'identification (PID).

5. Procédé de transmission de signaux audio modulés en fréquence à un récepteur FM, lequel comprend un réglage automatique de la fréquence appropriée pour la transmission de signaux audio à modulation de fréquence, l'adéquation de plusieurs fréquences pour la transmission de signaux audio à modulation de fréquence étant contrôlée en envoyant un signal audio à modulation de fréquence sur les fréquences à contrôler l'une après l'autre et en le recevant simultanément, une analyse du signal audio reçu étant effectuée et un critère d'adéquation de la fréquence correspondante pour la transmission des signaux audio à modulation de fréquence en étant déduit et les fréquences appropriées étant enregistrées dans une liste de fréquences qui est mise à disposition sous la forme d'un signal RDS.

6. Procédé selon la revendication 5, **caractérisé en ce que** le contrôle de l'adéquation d'au moins une fréquence pour la transmission de signaux audio à modulation de fréquence est répétée de manière cyclique et la liste de fréquences est actualisée.

7. Procédé selon la revendication 5 ou 6, **caractérisé en ce que** pendant la transmission des signaux audio à modulation de fréquence a lieu un réglage automatique de la fréquence sur la fréquence la plus appropriée pour la transmission des signaux audio à modulation de fréquence.

8. Procédé selon l'une des revendications 5 à 7, **caractérisé en ce que** pendant la transmission des signaux audio à modulation de fréquence, le signal utile est émis sur deux fréquences appropriées pour la transmission de signaux audio à modulation de fréquence, procédé selon lequel, dans le cas où la différence d'adéquation pour la transmission de signaux audio à modulation de fréquence entre les deux fréquences atteint un seuil défini, la fréquence dont l'adéquation évaluée est la plus faible est remplacée automatiquement par une fréquence plus appropriée.

9. Procédé selon l'une des revendications 5 à 8, **caractérisé en ce que** toutes les fréquences d'émission potentielles à l'intérieur de la bande de fréquences utilisée sont soumises à un contrôle de leur adéquation pour la transmission de signaux audio à modulation de fréquence.

10. Procédé selon l'une des revendications 5 à 9, **caractérisé en ce qu'**un identifiant (PID) est émis avec le signal RDS.
